**Europäisches Patentamt**

**European Patent Office**

**Office européen des brevets**

(11) Veröffentlichungsnummer: **0 005 458**
**B1**

(12) **EUROPÄISCHE PATENTSCHRIFT**

(45) Veröffentlichungstag der Patentschrift:
08.04.81

(51) Int. Cl.³: **B 23 B 31/16**

(21) Anmeldenummer: **79101224.8**

(22) Anmeldetag: **23.04.79**

(54) **Spannfutter für Drehmaschinen.**

(30) Priorität: **19.05.78 DE 2821910**

(43) Veröffentlichungstag der Anmeldung:
**28.11.79 Patentblatt 79/24**

(45) Bekanntmachung des Hinweises auf die Patenterteilung:
**08.04.81 Patentblatt 81/14**

(84) Benannte Vertragsstaaten:
**CH DE FR GB IT**

(56) Entgegenhaltungen:
**CH-A-344 887**
**DE-A-2 515 800**
**DE-A-2 711 904**
**US-A-3 682 491**
**US-A-3 744 808**

(73) Patentinhaber: **Röhm, Günter Horst,**
**Heinrich-Röhm-Strasse 50, D-7927 Sontheim (DE)**

(72) Erfinder: **Röhm, Günter Horst, Heinrich-Röhm-Strasse 50,**
**D-7927 Sontheim (DE)**

(74) Vertreter: **Fay, Hermann, Dipl.-Phys. Dr., Postfach 1767,**
**Ensingerstrasse 21 D-7900 Ulm (Donau) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

BUNDESDRUCKEREI BERLIN

Spannfutter für Drehmaschinen

Die Erfindung betrifft ein Spannfutter mit radial im Futterkörper verstellbaren Spannbacken, die zu ihrer Verstellung einzeln oder gemeinsam mit einem Antriebsglied in kraft- und formschlüssigem Eingriff stehen, wobei die Spannbacken radial und quer zur Futterachse in einen axial vorderen Backenteil und einen axial hinteren Backenteil aufgetrennt sind, beide Backenteile jeweils für sich radial verstellbar im Futterkörper geführt sind, und nur der hintere Backenteil mit dem Antriebsglied im Eingriff steht, und wobei ein von außen ein- und ausrückbares, am hinteren Backenteil geführtes, in radialer Richtung starr gehaltenes Kupplungsstück vorgesehen ist, das im eingerückten Kupplungszustand beide Backenteile zur radialen Mitnahme des vorderen Backenteiles durch den hinteren Backenteil verbindet und im ausgerückten Kupplungszustand den vorderen Backenteil zur vom hinteren Backenteil unabhängigen radialen Verstellung freigibt.

Derartige Spannfutter sind aus der US-A-3 682 491 bekannt und besitzen den Vorteil, daß nur noch der vordere Backenteil ausgewechselt werden braucht und daß es allein durch Verstellen des Kupplungsstückes möglich ist, die beiden Backenteile zum Spannvorgang miteinander zu verbinden oder zum gegenseitigen Verstellen oder zum Auswechseln des vorderen Backenteiles voneinander zu trennen. Sind die beiden Backenteile getrennt und wird der vordere Backenteil verschoben oder ausgewechselt, bleibt der hintere Backenteil in seiner Stellung im Futterkörper unverändert stehen und insbesondere im kraft- und formschlüssigen Eingriff mit dem die radialen Backenverstellung bewirkenden Antriebsglied verbunden. Dieser Eingriff braucht somit zum Backenwechsel nicht vorübergehend aufgehoben werden.

Die Kupplungsstücke des bekannten Spannfutters sind axial im hinteren Backenteil geführte Schieber, die in ihrer dem eingerückten Kupplungszustand entsprechenden Stellung gemeinsam durch einen Verriegelungsring gesichert sind, der koaxial zur Futterachse drehbar im Futterkörper gelagert und axial hinter den Schiebern angeordnet ist, so daß er in seiner Verriegelungsstellung einen Anschlag für die hintere Schieberstirnfläche bildet. Der Verriegelungsring besitzt im übrigen für jeden Schieber eine Aussparung, in die die Schieber in einer anderen Drehstellung des Verriegelungsringes eintreten können, wenn die Schieber in ihre dem ausgerückten Kupplungszustand entsprechende Stellung bewegt werden. Diese Aussparungen könnten, wenn auch nicht in der US-A-3 682 491 beschrieben, außerdem radial so begrenzt sein, daß sie die in sie vorstehenden Schieber und damit die die Schieber führenden hinteren Backenteile gegen Radialverstellungen im Sinne einer Spannbewegung blockieren. Dadurch würde sicher gestellt, daß das ständig mit den hinteren Backenteilen form- und kraftschlüssig verbundene Antriebsglied keiner Spannverstellungen fähig wäre, also auch über seine üblicherweise aus Sicherheitsgründen vorgesehenen Wegkontrolleinrichtungen das Anlaufen der Drehmaschinen nicht freigeben könnte, solange die Schieber sich nicht in ihrer dem eingerückten Kupplungszustand entsprechenden Stellung befinden und die sichere Verbindung zwischen dem hinteren und vorderen Teil der Spannbacken gewährleisten. Diese Sicherheitsmaßnahme erfordert jedoch den Verriegelungsring und ist daher nicht anwendbar, wenn — aus welchen Gründen auch immer, — auf einen solchen Verriegelungsring verzichtet werden soll oder muß. Beispielsweise kann dies der Fall sein, wenn zur Auswechslung oder Verstellung der vorderen Spannbackenteile die Verbindung zwischen dem hinteren und dem vorderen Backenteil an den verschiedenen Spannbacken nacheinander gelöst werden soll, oder wenn die für den Verriegelungsring im Futterkörper erforderliche Ausnehmung wegen der damit verbundenen Schwächung des Futterkörpers unerwünscht erscheint. Im übrigen ist es aus der US-A-3 744 808 bei einem Spannfutter bekannt, die Grundspannbacken gegen Radialverstellungen zu verriegeln, um die Aufsatzbacken auf die Abmessungen des zwischen ihnen einzuspannenden Werkstückes bearbeiten zu können. Für diese Verriegelung ist ein im Futterkörper axial hin und her verschiebbar geführter Verriegelungsstift vorgesehen, der einen Querschlitz besitzt, in den ein Kurbelzapfen greift, der sich exzentrisch an einem radial im Futterkörper gelagerten Stift befindet. Letzterer ist drehbar, aber radial unverschiebbar. Wird er verdreht, schiebt der Kurbelzapfen den Verriegelungsstift hin und her in ein Loch hinein, bzw. aus dem Loch heraus, das sich im Körper der Grundspannbacke befindet.

Der Erfindung liegt die Aufgabe zugrunde, ein Spannfutter der eingangs genannten Art so weiter auszubilden, daß die Verriegelung der Spannbewegung bei nicht voll im eingerückten Kupplungszustand befindlichen Kupplungsstücken unabhängig von der Anordnung eines allen Kupplungsstücken gemeinsamen Verriegelungsringes möglich ist.

Diese Aufgabe wird nach der Erfindung dadurch gelöst, daß das Kupplungsstück um eine zur Futterachse senkrechte Achse drehbar ist und an seiner Umfangsfläche Kupplungsvorsprünge trägt, die sich in Drehrichtung nur soweit über die Umfangsfläche erstrecken, daß sie in der dem voll ausgerückten Kupplungszustand entsprechenden Drehstellung des Kupplungsstückes vollständig aus sonst mit ihnen radial zur Futterachse formschlüssig im Eingriff stehenden Kupplungsaufnahmen an der dem hinteren Backenteil zugewendeten Trennfläche des vorderen Backenteiles ausgetreten sind, und daß für jede Spannbacke ein durch das zugehörige Kupplungsstück verstellbares Verriegelungsglied vorgesehen ist, das bei nicht oder nur unvollständig eingerücktem Kupplungszustand des Kupplungsstückes entweder dieses gegen Radialverstellungen oder das Antriebsglied gegen Axialverstellungen im Futterkörper sperrt, sowie bei voll eingerücktem Kupplungszustand des Kupplungsstückes die Sperrung dieses gegen Radialverstellungen oder die Sperrung des Antriebsgliedes gegen Axialverstellungen im Futterkörper aufhebt.

Der durch die Erfindung erreichte Fortschritt besteht darin, daß bei dem erfindungsgemäßen Spannfutter die Spannbewegung der Spannbacken und des Antriebsgliedes blockiert und dadurch das Anlaufen der Drehmaschine ausgeschlossen wird, wenn auch nur ein einziges der Kupplungsstücke sich nicht in der dem voll eingerückten Kupplungszustand entsprechenden Stellung befindet, ohne daß es zu dieser Sicherung eines Verriegelungsringes bedarf. Die durch die Kupplungsstücke verstellbaren Verriegelungsglieder sperren vielmehr im ausgerückten oder nicht vollständig eingerückten Kupplungszustand unmittelbar entweder das Kupplungsstück selbst gegen Radialverstellungen oder das Antriebsglied gegen Axialverstellungen im Futterkörper, so daß Spannbewegungen ausgeschlossen sind. Die Kupplung beider Backenteile kann daher an den verschiedenen Spannbacken nacheinander gelöst und wieder hergestellt werden, ohne daß dabei der Kupplungszustand der Backenteile an den anderen Spannbacken beeinflußt wird.

Eine bevorzugte Ausführungsform der Erfindung ist dadurch gekennzeichnet, daß das Kupplungsstück eine zylindrische Hülse ist, die drehbar und axial unverschiebbar auf einem zur Drehachse koaxialen Zapfen des hinteren Backenteiles gelagert ist. Zweckmäßig ist in diesem Fall das Kupplungsstück an seiner Mantelfläche durch eine Tangentialebene abgeflacht, die im ausgerückten Kupplungszustand dem vorderen Backenteil zugekehrt ist und an die in Drehrichtung Tangentialnuten anschließen, die zwischen sich die Kupplungsvorsprünge bilden. In der Regel empfiehlt es sich, die Kupplungsvorsprünge und Kupplungsaufnahmen als einander entsprechende Verzahnungen zu gestalten. Um die Kupplungsstücke in einfacher Weise von außen verdrehen zu können, sind sie in bevorzugter Ausführungsform mit je einer von außen zugänglichen Stirnwand versehen, in oder an der sich eine Schlüsselaufnahme für einen zum Verdrehen des Kupplungsstückes geeigneten Schlüssel befindet.

Hinsichtlich der Ausbildung der Verriegelungsglieder bestehen im Rahmen der Erfindung verschiedene Möglichkeiten. Eine sehr einfache und daher bevorzugte Auführungsform ist dadurch gekennzeichnet, daß das Verriegelungsglied ein zur Drehachse des Kupplungsstückes radial von diesem abstehender, am Kupplungsstück fester Verriegelungsvorsprung ist, der in eine sich über den Drehbereich des Kupplungsstückes erstreckende Nut im Futterkörper greift, die in Richtung der Drehachse des Kupplungsstückes im wesentlichen nur die Breite des Verriegelungsvorsprunges besitzt und sich allein an derjenigen Stelle mindestens auf die Länge des Spannhubes der Spannbacke erweitert, an der sich der Verriegelungsvorsprung in der dem vollständig eingerückten Kupplungszustand entsprechenden Drehstellung des Kupplungsstückes befindet. Die Sperrung der Spannbewegung erfolgt somit in diesem Fall durch unmittelbaren Eingriff des am Kupplungsstück festen Verriegelungsgliedes in die zugeordnete Nut des Futterkörpers, die eine Backenverstellung um mindestens den Spannhub nur in derjenigen Stellung des Kupplungsstückes ermöglicht, die seinem voll eingerücktem Kupplungszustand entspricht. Die Verriegelungsglieder können stattdessen aber auch unmittelbar am Antriebsglied angreifen und dieses blockieren. Eine in diesem Zusammenhang bevorzugte Ausführungsform der Erfindung ist dadurch gekennzeichnet, daß das Verriegelungsglied radial zur Futterachse im Futterkörper verstellbar geführt und durch das Kupplungsstück außer in dessen dem vollständig eingerückten Kupplungszustand entsprechenden Drehstellung in einer Lage festgehalten ist, in der es einen Anschlag für die Spannbewegung des Antriebsgliedes bildet. Im einzelnen wird man dann zweckmäßig die Anordnung so treffen, daß das Verriegelungsglied ein in Richtung radial nach außen unter einer Federkraft stehender Sperrbolzen ist, der gegen die Federkraft über eine Keilfläche an einem Sperrstück abgestützt ist, das im Futterkörper im wesentlichen parallel zur Futterachse geführt und durch das Kupplungsstück verstellbar ist. Zweckmäßig stößt dazu das Sperrstück gegen die Umfangsfläche des Kupplungsstückes, die an der Stelle, die sich im voll eingerückten Kupplungszustand des Kupplungsstückes gegenüber dem Sperrstück befindet, eine die Verstellung des Sperrstückes im Sinne einer radialen Auswärtsverstellung des Verriegelungsgliedes ermöglichende Ausnehmung besitzt, wobei sich diese Ausnehmung in Verstellrichtung des hinteren Spannbackenteiles über mindestens den Spannweg erstreckt, so daß bei vom Sperrbolzen freigegebenem Antriebsglied die Spannbewegung der Spannbacken nicht behindert wird.

Im folgenden wird die Erfindung an einem in der Zeichnung dargestellten Ausführungsbeispiel näher erläutert; es zeigt

Fig. 1 einen Axialschnitt durch ein Spannfutter nach der Erfindung, und zwar in der dem vollständig ausgerückten Kupplungszustand entsprechenden Drehstellung des Kupplungsstückes,

Fig. 2 eine Teilansicht des Spannfutters nach Fig. 1 in Richtung des dort eingetragenen Pfeiles II,

Fig. 3 einen Schnitt in Richtung III-III durch den

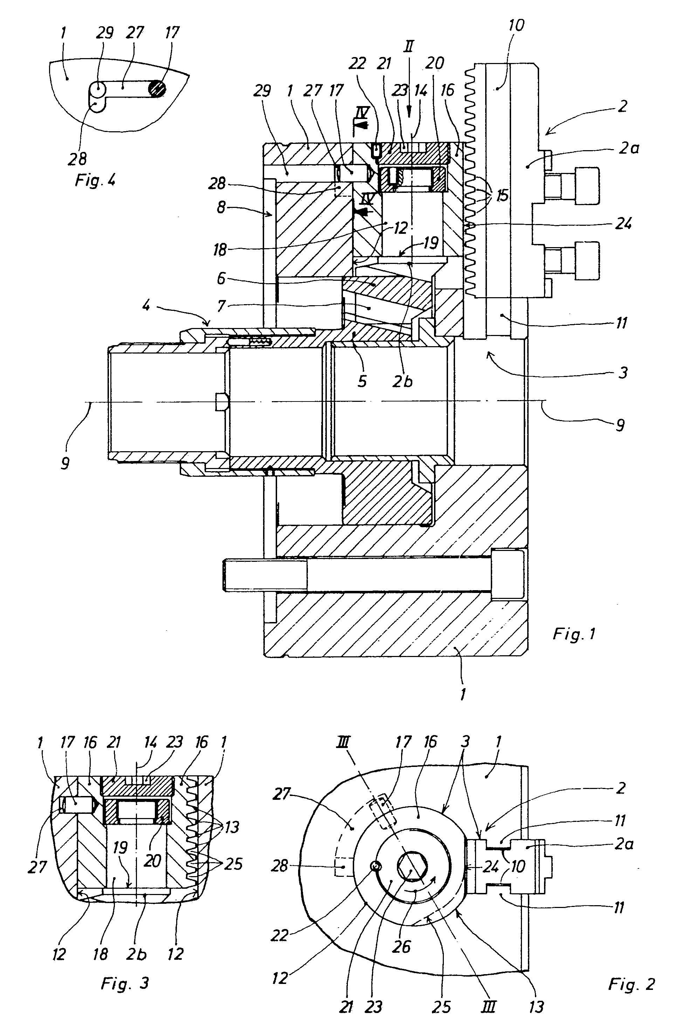

Gegenstand nach Fig. 2,

Fig. 4 einen Teilschnitt längs der Linie IV-IV in Fig. 1,

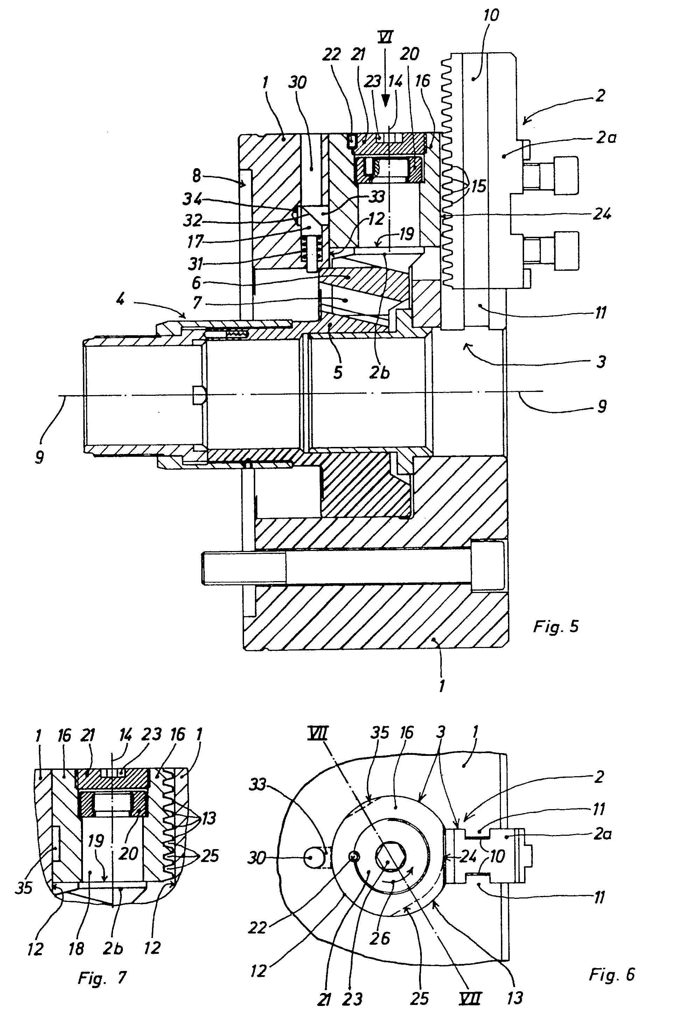

Fig. 5 einen Axialschnitt durch eine andere Ausführungsform des Spannfutters nach der Erfindung, ebenfalls in einer dem vollständig ausgerückten Kupplungszustand entsprechenden Drehstellung des Kupplungsstückes,

Fig. 6 eine Teilansicht des Spannfutters nach Fig. 5 in Richtung des dort eingetragenen Pfeiles VI,

Fig. 7 einen Schnitt in Richtung VII-VII durch den Gegenstand nach Fig. 6.

In der Zeichnung ist der Futterkörper des Spannfutters allgemein mit 1, die darin radial verstellbar geführten Spannbacken sind allgemein mit 2 bezeichnet. Zu ihrer Führung sind im Futterkörper 1 radiale Führungsnuten 3 vorgesehen. In den Axialschnitten nach Fig. 1 und 5 ist jeweils nur eine Spannbacke 2 dargestellt; jedoch besitzt ein solches Futter mehrere, in der Regel drei Spannbacken, die über den Futterumfang verteilt sind. Die Spannbacken 2 stehen zu ihrer radialen Verstellung mit einem Antriebsglied 4 in kraft- und formschlüssigem Eingriff, das in den Ausführungsbeispielen als axial verstellbare Treibhülse 5 ausgebildet ist, die über Keilhaken 6, 7 mit den Spannbacken 2 im Eingriff steht, wobei der Keilhaken 6 an der Treibhülse 5, der Keilhaken 7 an der Spannbacke 2 sitzt. Wird die Treibhülse 5 in den Fig. 1 und 5 nach links verschoben, so werden die Spannbacken 2 radial einwärts bewegt, bei entgegengesetzter axialer Verstellung der Treibhülse 5 dagegen radial auswärts verschoben. Die Treibhülse 5 kann in an sich bekannter und daher hier nicht näher zu beschreibender Weise durch einen Spannzylinder betätigt werden, dessen Spannkolben durch die hohle Drehmaschinenspindel hindurch über eine Zugstange oder ein Zugrohr mit der Treibhülse 5 verbunden sein kann. Ein solcher Kraftspannzylinder kann aber auch unmittelbar im Futterkörper 1 angeordnet sein. Auch ist in den Fig. 1 und 5 der Einfachheit wegen die regelmäßig vorgesehene und dem Anschluß des Futterkörpers 1 an die nicht dargestellte Drehmaschinenspindel dienende Anschlußflansch nicht gezeichnet, für dessen Aufnahme auf der Rückseite des Futterkörpers 1 die Eindrehung 8 vorgesehen ist.

Zwar sind in den Ausführungsbeispielen zum Antrieb der Spannbacken 2 die Keilhaken 6, 7 vorgesehen; der Antrieb der Spannbacken 2 kann aber auch mit jeder anderen bekannten Ausführungsform des Antriebsgliedes 4 und der die Spannbacken 2 mit dem Antriebsglied 4 verbindenden Kraftübertragungsglieder erfolgen. Unabhängig davon aber, wie im einzelnen auch das Antriebsglied 4 und diese Kraftübertragungsglieder ausgebildet und im Eingriff mit den Spannbacken stehen mögen, die Spannbacken 2 sind immer radial und quer zur Futterachse 9, und zwar in den Ausführungsbeispielen in einer zur Futterachse 9 senkrechten Ebene, in einen axial vorderen Backenteil 2a und einen axial hinteren Backenteil 2b getrennt. Beide Backenteile 2a, 2b sind jeweils für sich radial verstellbar in den Nuten 3 des Futterkörpers 1 geführt, nämlich der vordere Backenteil 2a mit Führungsnuten 10 in entsprechenden Führungsleisten 11 des Futterkörpers und der hintere Backenteil 2b in Führungsnuten 12 des Futterkörpers 1. Im übrigen lassen die Stellung des hinteren Backenkörpers 2b und die Eingriffsverhältnisse der Keilhaken 6, 7 in den 1 und 5 erkennen, daß die hinteren Backenteile 2b in ihrer radial jeweils äußersten Stellung gezeigt sind.

Von beiden Backenteilen 2a, 2b steht jeweils nur der hintere Backenteil 2b mit dem Antriebsglied 4, in den Ausführungsbeispielen also mit den Keilhaken 6 der Treibhülse 5, im Eingriff. Ein von außen ein- und ausrückbares Kupplungsstück 16 dient dazu, daß im eingerückten, in der Zeichnung nicht dargestellten Kupplungszustand beide Backenteile 2a, 2b zur radialen Mitnahme des vorderen Backenteiles 2a durch den hinteren Backenteil 2b starr verbunden sind, während im in der Zeichnung dargestellten vollständig ausgerückten Kupplungszustand der vordere Backenteil 2a zur vom hinteren Backenteil 2b unabhängigen radialen Verstellung freigegeben ist, so daß der vordere Backenteil 2a in der radialen Führungsnut 3 verschoben und/oder aus ihr vollständig herausgenommen und gegen einen anders gestalteten Backenteil ausgewechselt werden kann. Selbstverständlich besteht dabei auch im Rahmen der Erfindung die in der Zeichnung der Einfachheit wegen nicht dargestellte Möglichkeit, den vorderen auswechselbaren Backenteil 2a mit weiteren sogenannten Aufsatzbacken zu versehen. Der hintere Backenteil 2b dagegen ist nicht auswechselbar und bleibt ständig im Eingriff mit dem Antriebsglied 4.

Die Kupplungsstücke 16 sind am hinteren Backenteil 2b geführt und in zur Futterachse 9 radialer Richtung starr, also unverschiebbar an ihm gehalten. Die Kupplungsstücke 16 sind um eine zur Futterachse 9 senkrechte Achse 14 drehbar und tragen an ihrer Umfangsfläche Kupplungsvorsprünge 13, die sich in Drehrichtung nur soweit über die Umfangsfläche erstrecken, daß sie in der dem voll ausgerückten, in der Zeichnung dargestellten Kupplungszustand entsprechenden Drehstellung des Kupplungsstückes 16 vollständig aus sonst mit ihnen radial zur Futterachse 9 formschlüssig im Eingriff stehenden Kupplungsaufnahmen 15 an der dem hinteren Backenteil 2b zugewendeten Trennfläche des vorderen Backenteiles 2a ausgetreten sind. Für jede Spannbacke 2 ist weiter ein eigenes durch das zugehörige Kupplungsstück 16 verstellbares Verriegelungsglied 17 vorgesehen, das bei nicht oder nur unvollständig eingerücktem Kupplungszustand des Kupplungsstückes 16, wie in der Zeichnung dargestellt, entweder entsprechend den Fig. 1 bis 4 dieses Kupplungsstückes 16 gegen Radialverstellungen oder entsprechend den Fig. 5 bis 7 das Antriebsglied 4 gegen Axialverstellungen im Futterkörper 1 sperrt.

Im einzelnen ist das Kupplungsstück 16 eine zylindrische Hülse, die drehbar und axial unverschiebbar auf einem zur Drehachse 14 koaxialen Zapfen 18 des hinteren Backenteiles 2b gelagert und außerdem mit seiner äußeren Umfangsfläche in der zylindrischen Nut 12 des Futterkörpers 1 geführt ist. Am radial inneren Ende sitzt das Kupplungsstück 16 an einer Ringschulter 19 auf, während es am radial äußeren Ende des Zapfens 18 einen Ringfalz besitzt, der von einem unverdrehbar und axial unverschiebbar auf den Zapfen 18 aufgesetzten Ring 20 übergriffen ist. An der äußeren Umfangsfläche des Futterkörpers 1 sind die die Kupplungsstücke 16 bildenden Hülsen jeweils durch eine Stirnwand 21 abgeschlossen, die durch einen Stift 22 unverdrehbar an der Hülse sitzt und zum Verdrehen des Kupplungsstückes 16 im ganzen eine Schlüsselaufnahme 23 besitzt. Das Kupplungsstück 16 ist an seiner äußeren Umfangsfläche durch eine Tangentialebene 24 abgeflacht, die im ausgerückten Kupplungszustand dem vorderen Backenteil 2a zugekehrt ist, wie es in der Zeichnung dargestellt ist, so daß zwischen dem Kupplungsstück 16 und dem vorderen Backenteil 2a kein radial zur Futterachse 9 formschlüssiger Eingriff besteht. Jedoch schließen sich an diese Tangentialebene 24 in Drehrichtung Tangentialnuten 25 an, die zwischen sich die Kupplungsvorsprünge 13 bilden. Werden daher die Kupplungsstücke 16 in Richtung der in den Fig. 2 bzw. 6 dargestellten Pfeile 26 verdreht, so greifen die Kupplungsvorsprünge 13 in die ihnen zugeordneten Kupplungsaufnahmen 15 an den vorderen Backenteilen 2a, wodurch der zur Futterachse 9 radiale formschlüssige Eingriff und dadurch die Mitnahme des vorderen Backenteiles 2a durch den hinteren Backenteil 2b bewirkt wird. Die Kupplungsvorsprünge 13 und Kupplungsaufnahmen 15 sind als einander entsprechende Verzahnungen ausgebildet, wobei sich die Verzahnung am vorderen Backenteil 2a über dessen gesamte radiale Länge erstreckt, so daß er in verschiedenen radialen Stellungen mit dem hinteren Backenteil 2b gekuppelt werden kann.

Im Ausführungsbeispiel nach den Fig. 1 bis 4 ist das Verriegelungsglied 17 ein in bezug auf die Drehachse 14 des Kupplungsstückes 16 radial von diesem abstehender, am Kupplungsstück 16 fester Verriegelungsvorsprung in Form eines in die Wand des Kupplungsstückes 16 fest eingesetzten Stiftes. Dieser Kupplungsvorsprung greift in eine sich über den Drehbereich des Kupplungsstückes 16 erstreckende Nut 27 im Futterkörper 1. Diese Nut 27 besitzt in Richtung der Drehachse 14 des Kupplungsstückes 16, also radial zur Futterachse 9, nur die Breite des Verriegelungsgliedes 17, so daß eine Radialverstellung des Kupplungsstückes 16 nicht möglich ist. Nur an derjenigen Stelle, an der sich das Verriegelungsglied 17 in der dem vollständig eingerückten Kupplungszustand entsprechenden Drehstellung des Kupplungsstückes 16 befindet, besitzt die Nut 27 eine Erweiterung 28 auf mindestens die Länge des Spannhubes der Spannbacke 2, so daß in dieser Stellung des Kupplungsgliedes 16, die seinem vollständig eingerückten Kupplungszustand entspricht, das in die Nut 27 vorstehende Verriegelungsglied 17 die Spannbewegung nicht beeinträchtigen kann. Um das Verriegelungsglied 17 in das Kupplungsstück 16 einsetzen zu können, ist der Futterkörper 1 mit einer Bohrung 29 versehen.

Im Ausführungsbeispiel nach den Fig. 5 bis 7 ist dagegen das Verriegelungsglied 17 radial zur Futterachse 9 in einer Bohrung 30 des Futterkörpers 1 verstellbar geführt. Durch das Kupplungsstück 16 wird es in der in Fig. 5 dargestellten Lage festgehalten, in der es einen Anschlag für die Spannbewegung des Antriebsgliedes 4, also für die Spannhülse 5 bildet, diese also unmittelbar blockiert. Lediglich in der dem vollständig eingerückten Kupplungszustand entsprechenden Drehstellung des Kupplungsstückes 16 gibt das Verriegelungsglied 17 die Axialbewegung des Antriebsgliedes 4 frei. Dazu ist das Verriegelungsglied 17 im einzelnen ein in Richtung radial zur Futterachse 9 nach außen unter der Kraft einer Feder 31 stehender Sperrbolzen, der gegen die Kraft dieser Feder 31 über eine Keilfläche 32 an einem Sperrstück 33 abgestützt ist, das im Futterkörper 1 im wesentlichen parallel zur Futterachse 9 in einer Bohrung 34 geführt und durch das Kupplungsstück 16 verstellbar ist. Dazu stößt das Sperrstück 33 gegen die Umfangsfläche des Kupplungsstückes 16, so daß die in Fig. 5 dargestellte Sperrstellung des Verriegelungsgliedes 17 eingehalten wird. Jedoch besitzt die Umfangsfläche des Kupplungsstückes 16 an derjenigen Stelle, die sich im voll eingerückten Kupplungszustand des Kupplungsstückes 16 gegenüber dem Sperrstück 33 befindet, eine die Verstellung des Sperrstückes 33 im Sinne einer radialen Auswärtsverstellung des Verriegelungsgliedes 17 ermöglichende Ausnehmung 35, im Ausführungsbeispiel ebenfalls in Form einer Tangentialnut. Diese Ausnehmung 35 erstreckt sich in Verstellrichtung des hinteren Spannbackenteiles 2b, also radial zur Futterachse 9, über mindestens den Spannhub so daß sich bei vom Verriegelungsglied 17 freigegebenem Antriebsglied 4, 5 die Spannbacke 2 und mit ihr das Kupplungsstück 16 um den Spannhub unbehindert durch das in die Ausnehmung 35 eingetretene Sperrstück 33 bewegen kann.

## Patentansprüche:

1. Spannfutter mit radial im Futterkörper (1) verstellbaren Spannbacken (2), die zu ihrer Verstellung einzeln oder gemeinsam mit einem Antriebsglied (4, 5) in kraft- und formschlüssigem Eingriff stehen, wobei die Spannbacken (2) radial und quer zur Futterachse (9) in einen axial vorderen Backenteil (2a) und einen axial hinteren Backenteil (2b) aufgetrennt sind, beide Backenteile (2a,2b) jeweils für sich radial verstellbar im Futterkörper (1) geführt sind, und nur der hintere Backenteil (2b) mit dem Antriebsglied (4, 5) im Eingriff steht, und wobei ein von außen ein- und ausrückbares, am hinteren Backenteil (2b) geführtes, in radialer Richtung starr gehaltenes Kupplungsstück (16) vorgesehen ist, das im eingerückten Kupplungszustand beide Backenteile (2a, 2b) zur radialen Mitnahme des vorderen Backenteiles (2a) durch den hinteren Backenteil (2b) verbindet und im ausgerückten Kupplungszustand den vorderen Backenteil (2a) zur vom hinteren Backenteil (2b) unabhängigen radialen Verstellung freigibt, dadurch gekennzeichnet, daß das Kupplungsstück (16) um eine zur Futterachse (9) senkrechte Achse (14) drehbar ist und an seiner Umfangsfläche Kupplungsvorsprünge (13) trägt, die sich in Drehrichtung nur soweit über die Umfangsfläche erstrecken, daß sie in der dem voll ausgerückten Kupplungszustand entsprechenden Drehstellung des Kupplungsstückes (16) vollständig aus sonst mit ihnen radial zur Futterachse (9) formschlüssig im Eingriff stehenden Kupplungsaufnahmen (15) an der dem hinteren Backenteil (2b) zugewendeten Trennfläche des vorderen Backenteiles (2a) ausgetreten sind, und daß für jede Spannbacke (2) ein durch das zugehörige Kupplungsstück (16) verstellbares Verriegelungsglied (17) vorgesehen ist, das bei nicht oder nur unvollständig eingerücktem Kupplungszustand des Kupplungsstückes (16) entweder dieses gegen Radialverstellungen oder das Antriebsglied (4, 5) gegen Axialverstellungen im Futterkörper (1) sperrt, sowie bei voll eingerücktem Kupplungszustand des Kupplungsstückes (16) die Sperrung dieses gegen Radialverstellungen oder die Sperrung des Antriebsgliedes (4, 5) gegen Axialverstellungen im Futterkörper (1) aufhebt.

2. Spannfutter nach Anspruch 1, dadurch gekennzeichnet, daß das Kupplungsstück (16) eine zylindrische Hülse ist, die drehbar und axial unverschiebbar auf einem zur Drehachse (14) koaxialen Zapfen (18) des hinteren Backenteiles (2b) gelagert ist.

3. Spannfutter nach Anspruch 2, dadurch gekennzeichnet, daß das Kupplungsstück (16) an seiner Mantelfläche durch eine Tangentialebene (24) abgeflacht ist, die im ausgerückten Kupplungszustand dem vorderen Backenteil (2a) zugekehrt ist und an die in Drehrichtung Tangentialnuten (25) anschließen, die zwischen sich die Kupplungsvorsprünge (13) bilden.

4. Spannfutter nach einem der Ansprüche 1 bis 3, dadurch gekennzeichnet, daß die Kupplungsvorsprünge (13) und die Kupplungsaufnahmen (15) des vorderen Backenteiles (2a) als einander entsprechende Verzahnungen ausgebildet sind.

5. Spannfutter nach einem der Ansprüche 1 bis 4, dadurch gekennzeichnet, daß die Kupplungsstücke (16) je eine von außen zugängliche Stirnwand (21) aufweisen, in oder an der sich zum Verdrehen des Kupplungsstückes (16) eine Schlüsselaufnahme (23) befindet.

6. Spannfutter nach einem der Ansprüche 1 bis 5, dadurch gekennzeichnet, daß das Verriegelungsglied (17) ein in bezug auf die Drehachse (14) des Kupplungsstückes (16) radial von diesem abstehender, am Kupplungsstück (16) fester, in Form eines Stiftes ausgebildeter Verriegelungsvorsprung ist, der in eine sich über den Drehbereich des Kupplungsstückes (16) erstreckende Nut (27) im Futterkörper (1) greift, die in Richtung der Drehachse (14) des Kupplungsstückes (16) nur die Breite des Verriegelungsvorsprunges besitzt und sich allein an derjenigen Stelle (bei 28) mindestens auf die Länge des Spannhubes der Spannbacke (2) erweitert, an der sich der Verriegelungsvorsprung in der dem vollständig eingerückten Kupplungszustand entsprechenden Drehstellung des Kupplungsstückes (16) befindet.

7. Spannfutter nach einem der Ansprüche 1 bis 5, dadurch gekennzeichnet, daß das Verriegelungsglied (17) radial zur Futterachse (9) im Futterkörper (1) verstellbar geführt und durch das Kupplungsstück (16) außer in dessen dem vollständig eingerückten Kupplungszustand entsprechenden Drehstellung in einer Lage festgehalten ist, in der es einen Anschlag für die Spannbewegung des Antriebsgliedes (4, 5) bildet.

8. Spannfutter nach Anspruch 7, dadurch gekennzeichnet, daß das Verriegelungsglied (17) ein in Richtung radial nach außen unter einer Federkraft (31) stehender Sperrbolzen ist, der gegen die Federkraft über eine Keilfläche (32) an einem Sperrstück (33) abgestützt ist, das im Futterkörper (1) parallel zur Futterachse (9) geführt und durch das Kupplungsstück (16) verstellbar ist.

9. Spannfutter nach Anspruch 8, dadurch gekennzeichnet, daß das Sperrstück (33) gegen die Umfangsfläche des Kupplungsstückes (16) stößt, die an der Stelle, die sich im voll eingerückten Kupplungszustand des Kupplungsstückes (16) gegenüber dem Sperrstück (33) befindet, eine die Verstellung des Sperrstückes (33) im Sinne einer radialen Auswärtsverstellung des Verriegelungsgliedes (17) ermöglichende Ausnehmung (35) besitzt, wobei sich diese Ausnehmung (35) in Verstellrichtung des hinteren Spannbackenteiles (2b) über mindestens den Spannhub erstreckt.

**Claims**

1. A clamping chuck comprising clamping jaws (2) which are radially adjustable in the chuck body (1) and which are in force-locking and form-locking engagement with an actuating member (4, 5), for adjustment thereof, individually or jointly, wherein the jaws (2) are divided radially and transversely with respect to the chuck centre line (9) into an axially forward jaw portion (2a) and an axially rearward jaw portion (2b), both jaw portions (2a, 2b) are each guided for themselves for radial adjustment in the chuck body (1), and only the rearward jaw portion (2b) is in engagement with the actuating member (4, 5), and wherein there is provided a coupling member (16) which is engageable and disengageable from the exterior and which is guided on the rearward jaw portion (2b) and which is held rigidly in the radial direction and which, in the engaged coupling condition, connects the two jaw portions (2a, 2b) for radial entrainment of the forward jaw portion (2a) by the rearward jaw portion (2b), and, in the disengaged coupling condition, releases the forward jaw portion (2a) for radial adjustment independently of the rearward jaw portion (2b), characterised in that the coupling member (16) is rotatable about an axis (14) which is normal to the chuck centre line (9) and on its peripheral surface carries coupling projections (13) which extend in the direction of rotation over the peripheral surface only to such an extent that, in the rotary position of the coupling member (16) which corresponds to the fully disengaged coupling condition, said coupling projections are completely removed from coupling receiving means (15), which are otherwise form-lockingly in engagement therewith radially with respect to the chuck centre line (9), at the separating surface of the forward jaw portion (2a), which is towards the rearward jaw portion (2b), and that for each jaw (2) there is provided a locking member (17) which is displaceable by the associated coupling member (16) and which, in the non-engaged or only incompletely engaged coupling condition of the coupling member (16), either locks the coupling member (16) against radial movements or locks the actuating member (4, 5) against axial movements in the chuck body (1), and which, in the fully engaged coupling condition of the coupling member (16), removes the locking action on the coupling member in respect of radial movements or the locking action on the actuating member (4, 5) in respect of axial movements in the chuck body (1).

2. A chuck according to claim 1 characterised in that the coupling member (16) is a cylindrical sleeve which is mounted rotatably and axially immovably on a trunnion portion (18) of the rearward jaw portion (2b), which trunnion portion is coaxial with the axis of rotation (14).

3. A chuck according to claim 2 characterised in that the coupling member (16) is flattened at its peripheral surface by a tangential plane (24) which, in the disengaged coupling condition, faces towards the forward jaw portion (2a) and which is adjoined in the rotary direction by tangential grooves (25) which between them form the coupling projections (13).

4. A chuck according to one of claims 1 to 3 characterised in that the coupling projections (13) and the coupling receiving means (15) of the forward jaw portion (2a) are in the form of tooth configurations which correspond to each other.

5. A chuck according to one of claims 1 to 4 characterised in that the coupling members (16) each have an end wall portion (21) which is accessible from the outside and in or on which is disposed a key receiving means (23) for rotating the coupling member (16).

6. A chuck according to one of chlaims 1 to 5 characterised in that the locking member (17) is a locking projection which projects radially from the coupling member (16) relative to the axis of rotation (14) thereof and which is fixed on the coupling member (16) and which is in the form of a pin and which engages into a groove (27) in the chuck body (1), which extends over the range of rotary movement of the coupling member (16), which groove is only of the width of the locking projection in the direction of the axis of rotation (14) of the coupling member (16) and is only increased in width, at least to the length of the clamping stroke movement of the clamping jaw (2), at that position (at 28) at which the locking projection is in the rotary position of the coupling member (16) which corresponds to the fully engaged coupling condition.

7. A chuck according to one of claims 1 to 5 characterised in that the locking member (17) is guided movably radially with respect to the chuck centre line (9) in the chuck body and, except in the rotary position of the coupling member (16) corresponding to the fully engaged coupling condition, is held by the coupling member (16) in a position in which it forms a stop for the clamping movement of the actuating member (4, 5).

8. A chuck according to claim 7 characterised in that the locking member (17) is a lock pin which is loaded radially outwardly by a spring force (31) and which bears against a lock member (33) by way of a wedge surface (32), against the spring force, which lock member (33) is mounted in the chuck body (1) parallel to the chuck centre line (9) and is displaceable by the coupling member (16).

9. A chuck according to claim 8 characterised in that the lock member (33) butts against the peripheral surface of the coupling member (16), the peripheral surface, at the position which is opposite the lock member (33) in the fully engaged coupling condition of the coupling member (16), having a recess (35) which permits displacement of the lock member (33) in the direction of a radial outward movement of the locking member (17), wherein said recess (35) extends in the direction of adjustment of the rearward jaw portion (2b) over at least the clamping stroke length.

**Revendications**

  1. Mandrin de serrage, comportant:

— déplaçables radialement dans le corps du mandrin, des mâchoires de serrage (2) qui, pour leur déplacement sont — individuellement ou collectivement — en prise, par l'effet de forces et de conjugaison de formes, avec un organe d'entraînement (4, 5), ces mâchoires (2) étant partagées, radialement et transversalement à l'axe (9) du mandrin en une partie antérieure (2a) et une partie postérieure (2b) (les mots »antérieure« et »postérieure« étant compris en considérant une direction axiale) qui sont guidées chacune, individuellement — avec possibilité de déplacement radial — dans le corps (1) du mandrin, la partie postérieure (2b) étant seule à être en prise avec l'organe d'entraînement (4, 5)
— une pièce d'accouplement (16) qui peut être mise en condition d'accouplement et de désaccouplement, cela en procédant depuis l'extérieur, et qui est guidée sur la partie postérieure (2b) et est arrêtée en direction radiale, et qui, dans la condition d'accouplement, relie les deux pârties de mâchoire (2a, 2b) pour assurer l'entraînement radial de la partie antérieure (2a) par la partie postérieure (2b) et, dans la condition de désaccouplement, libère la partie antérieure (2a) pour permettre de la déplacer radialement, indépendamment de la partie postérieure (2b), ce mandrin étant caractérisé par le fait que la pièce d'accouplement (16) est montée de façon à pouvoir tourner autour d'un axe (14) perpendiculaire à l'axe du mandrin et porte, sur sa périphérie, des saillies d'accouplement (13) qui, en direction giratoire, n'occupent sur cette périphérie qu'une étendue telle que si la pièce d'accouplement (16) est à une position angulaire correspondant au désaccouplement complet, elles sont alors complètement dégagées de creux ou logements d'accouplement (15) prévus sur la surface de la partie antérieure (2a), en regard de la partie postérieure (2b), et que, dans les autres cas, ces creux (15) soient en prise avec ces saillies (13) en établissant ainsi avec elles en direction radiale une liaison mécanique positive (»radiale« en se rapportant à l'axe (9) du mandrin), et par le fait qu'il est prévu, pour chaque mâchoire (2), un organe de verrouillage (17) qui est manoeuvrable par la pièce d'accouplement (16) afférente à cette mâchoire et qui, lorsque cette pièce d'accouplement (16) est en condition de désaccouplement ou d'accou-plement avec engagement incomplet, réa-lise un arrêt empêchant soit les déplacements radiaux de cette pièce d'accouplement (16), soit les déplacements axiaux de l'organe d'entraînement (4, 5) dans le corps (1) du mandrin, et en outre qui, lorsque la pièce d'accouplement (16) est en condition d'accouplement avec engagement complet, supprime cet arrêt empêchant les déplacements radiaux de la pièce d'accouplement (16), ou les déplacements axiaux de l'organe d'entraînement (4, 5), dans le corps (1) du mandrin.

2. Mandrin selon la revendication 1, caractérisé par le fait que la pièce d'accouplement (16) est un manchon cylindrique qui est monté, avec possibilité de rotation mais sans possibilité de déplacement axial, sur un tourillon (18) coaxial à son axe de rotation (14), ce tourillon (18) appartenant à la partie postérieure (2b) de la mâchoire.

3. Mandrin selon la revendication 2, caractérisé par le fait qu'en sa surface périphérique la pièce d'accouplement (16) est aplatie le long d'un plan tangentiel (24) qui, dans la condition de désaccouplement, est en regard de la partie antérieure (2a) et auquel se raccordent des rainures (25) tangentielles en direction giratoire, lesquelles forment entre elles les saillies d'accouplement (13).

4. Mandrin selon l'une quelconque des revendications 1 à 3, caractérisé par le fait que les saillies d'accouplement (13), et les creux d'accouplement (15) de la partie antérieure (2a) de la mâchoire, sont réalisés sous la forme de dentures se correspondant mutuellement.

5. Mandrin selon l'une quelconque des revendications 1 à 4, caractérisé par le fait que les pièces d'accouplement (16) présentent chacune une paroi extrême (21) accessible de l'extérieur, dans ou sur laquelle se trouve une prise de clé (23) pour faire tourner la pièce d'accouplement (16).

6. Mandrin selon l'une quelconque des revendications 1 à 5, caractérisé par le fait que l'organe de verrouillage (17) est une saillie de verrouillage qui dépasse radialement de la pièce d'accouplement (16) (»radialement« en se rapportant à l'axe de rotation (14) de cette pièce (16)) à laquelle elle est liée, cette saillie de verrouillage étant réalisée sous la forme d'un doigt qui s'engage dans une rainure (27), laquelle est aménagée dans le corps (1) du mandrin et s'étend sur la plage de rotation de la pièce d'accouplement (16), cette rainure n'ayant, dans la direction de l'axe de rotation (14) de la pièce d'accouplement (16), que la largeur de ladite saillie de verrouillage, et possédant un élargissement au moins égal à la longueur de la course de serrage de la mâchoire (2), cet élargissement étant situé uniquement à l'endroit (28) où la saillie de verrouillage se trouve lorsque la position angulaire de la pièce d'accouplement (16) correspond à la condition d'accouplement avec engagement complet.

7. Mandrin selon l'une quelconque des revendications 1 à 5, caractérisé par le fait que l'organe de verrouillage (17) est guidé, avec possibilité de déplacement radial dans le corps (1) du mandrin (»radial« en se rapportant à l'axe (9) du mandrin), et par le fait que, lorsqu'elle n'est pas dans sa position angulaire correspon-dant à l'accouplement avec engagement complet, la pièce d'accouplement (16) maintient cet organe de verrouillage (17) dans une position dans laquelle il constitue une butée empêchant l'organe d'entraînement (4, 5) d'accomplir un mouvement de serrage.

8. Mandrin selon la revendication 7, caractérisé par le fait que l'organe de verrouillage (17) est un doigt d'arrêt orienté radialement vers l'extérieur et se trouvant soumis à la force d'un ressort (31), ce doigt prenant appui, contre la force du ressort et par l'intermédiaire d'une surface en coin (32), contre une pièce d'arrêt (33) qui est guidée, parallèlement à l'axe (9) du mandrin, dans le corps (1) du mandrin, et qui est déplaçable par la pièce d'accouplement (16).

9. Mandrin selon la revendication 8, caractérisé par le fait que la pièce d'arrêt (33) bute contre la surface périphérique de la pièce d'accouplement (16), laquelle surface possède, à l'endroit qui se trouve en face de la pièce d'arrêt (33) lorsque la pièce d'accouplement est en condition d'accouplement avec engagement complet, un évidement (35) autorisant le déplacement de la pièce d'arrêt (33) dont il découle un déplacement radial, vers l'extérieur, de l'organe de verrouillage (17), ledit évidement (35) possédant, dans la direction du déplacement de la partie arrière (2b) de la mâchoire, une étendue au moins égale à la course de serrage.

Fig. 4

Fig. 1

Fig. 3

Fig. 2

Fig. 5

Fig. 7

Fig. 6